# EUROPÄISCHE PATENTSCHRIFT

(11) **EP 1 336 316 B1**
(45) Veröffentlichungstag und Bekanntmachung des Hinweises auf die Patenterteilung: **22.03.2006**
(21) Anmeldenummer: 01997965.7
(22) Anmeldetag: 23.11.2001
(51) Int. Cl.: H04Q 7/38

(54) **KOMMUNIKATIONSSYTEM UND VERFAHREN ZUR VERGEBÜHRUNG VON TEILNEHMERGRUPPEN**
COMMUNICATIONS SYSTEM AND METHOD FOR CALCULATING FEES FOR SUBSCRIBER GROUPS
SYSTEME DE COMMUNICATION ET PROCEDE DE FACTURATION DE GROUPES D'ABONNES

(30) Priorität: 23.11.2000 DE 10058064
(43) Veröffentlichungstag der Anmeldung: 20.08.2003
(73) Patentinhaber: Viag Interkom GmbH & Co., 80687 München (DE)
(72) Erfinder: GÖBEL, Marcus, 81371 München (DE)
(74) Vertreter: Lorenz, Eduard
(86) Internationale Anmeldenummer: PCT/EP2001/013661
(87) Internationale Veröffentlichungsnummer: WO 2002/043426

(56) Entgegenhaltungen:
- WO-A-98/24257
- WO-A-98/53602
- WO-A-99/20064
- US-A- 4 979 207
- US-A- 5 819 176

## Beschreibung

Die vorliegende Erfindung betrifft ein Kommunikationssystem bzw. ein Verfahren zum Betreiben des Kommunikationssystems gemäß dem Oberbegriff des Anspruchs 1 bzw. 10.

Herkömmliche Kommunikationssysteme bzw. die die Kommunikationssysteme bereitstellenden Vermittlungseinheiten - auch des Anmelders - arbeiten mit einem erheblichen technischen und verwaltungstechnischen, Aufwand. Der technische Aufwand beinhaltet das Zusammenspiel mehrerer technischer Komponenten eines Netzwerkes, welches dafür ausgelegt ist, neben Festnetzstationen auch Mobilstationen zu verwalten und zwar derart, dass dem Nutzer ständig ein funktionstüchtiges Netzwerk zur Verfugung steht. Mit vorhandenen Standards, beispielsweise GSM-Standards, wird nun versucht dem Nutzer beispielsweise von Mobilstationen optimale Nutzungsbedingungen bereitzustellen bzw. die Bedürfnisse des Mobilstationsnutzers zu optimieren. Aufgrund des vorgegebenen Standards sind aber die Nutzungsmöglichkeiten hinsichtlich des dafür einzusetzenden technischen Aufwandes lediglich im begrenzten Umfang ausbaubar. Dennoch wurden bereits Anstrengungen vermittlungseinheitenseitig und somit häufig netzwerkseitig untemommen, damit die vorhandenen Vermittlungseinheiten Produkte anbieten können, die sich von den Wettbewerbem unterscheiden. Hierzu wurden vielfältig die bei einer Mobilstation (MS) zur Verfügung stehenden Parameter, wie beispielsweise Teilnehmerkenndatenmodul (SIM-Karte) und darauf abgelegte Teilnehmerkenndaten (IMSI) sowie entsprechende Heimregisterdatei (HLR), mit einer Vermittlungseinheit auf unterschiedlichste Weise verknüpft, um insbesondere die teilweise unterschiedlich verwalteten Teilnehmerkenndaten (IMSI) und die entsprechenden zugeordneten Rufnummern (MSISDN) in Verbindung zu bringen.

Die bisher bekannten Lösungen machten es jedoch in der Regel erforderlich, für jedes weitere Produkt einer Vermittlungseinheit eine spezielle Änderung im Netzwerk ggf. technische Ergänzungen einzubauen, deren Umsetzung somit extrem kostenaufwendig bzw. technisch nicht mehr zu realisieren war.

Aus der U.S. 4,979,207 ist ein Kommunikationssystem bekannt, mittels dessen vermieden werden soll, dass ein Kunde mit einer Vielzahl von mobilen Endgeräten und jeweils zugehörigen Rufnummern eine entsprechende Vielzahl einzelner Gebührenrechnungen erhält, die gegebenenfalls unterschiedlich formatiert sind. Ziel ist es, für einen derartigen Kunden eine zusammengefaßte Rechnung zu erstellen. Dazu ist vorgesehen, dass dem Kunden eine Identifikationsnummer verliehen wird, die den Kunden eindeutig kennzeichnet. Auf der Grundlage dieser Identifikationsnummer wird eine Zuordnung der abzurechnenden Telefonate zu dem Kunden vorgenommen und sodann eine Gebührenrechnung erstellt.

Es ist daher Aufgabe der vorliegenden Erfindung, die bekannten Kommunikationssysteme bzw. das bekannte Verfahren zum Betreiben eines Kommunikationssystems derart weiter zu entwickeln, dass die Nutzungsmöglichkeiten für den Mobilstationsnutzer weiter verbessert werden. Eine weitere Aufgabe besteht darin, den technischen Aufwand hinsichtlich der Änderungen netzwerkseitig so gering wie möglich zu halten.

Gelöst werden diese Aufgaben vorrichtungstechnisch mit den Merkmalen des Anspruchs 1 und verfahrenstechnisch mit den Merkmalen des Anspruchs 10.

Anmeldungsgemäß wird das bekannte Kommunikationssystem mit einer Verwaltungseinheit versehen, welches ein Verwaltungsdatenfeld aufweist, welche die Teilnehmerkenndaten (IMSI), die zugeordneten Rufnummern (MSISDN) und ein Kenndatenfeld (ID-KORR) enthält das sich in einem aktivierten oder deaktivierten Zustand befindet**.** In dieses Verwaltungsdatenfeld werden somit die anmeldungsgemäß relevanten Grundparameter, beispielsweise händlerseitig, zur Verfügung gestellt. Mit dieser Maßnahme, dass zu den GSM standardisierten Parametern lediglich ein Kenndatenfeld vermittlungseinheitenintern hinzugefügt wird, sind die händlerseitigen Handlungen auf ein Minimum reduziert. Das anmeldungsgemäße Kommunikationssystem weist ferner eine Vergebührungseinheit mit einem Vergebührungsdatenfeld auf, welches eine Zuordnungstabelle enthält, in der die Teilnehmerkenndaten mit den Rufnummern verknüpft werden sofern sich das Kenndatenfeld im aktivierten Zustand befindet und den zu verknüfpenden Teilnehmerkenndaten und Rufnummern identische Werte des Kenndatenfeldes zugewiesen sind. Mit dieser Maßnahme besteht auf einfache Weise eine erweiterte Nutzungsmöglichkeit für den Mobilstationsnutzer. Aufgrund dieser Verknüpfung wird erreicht, dass beispielsweise ein Nutzer einer Mobilstation über unterschiedliche Rufnummern angerufen werden kann und somit lediglich ein Abrechnungskonto vorhanden sein muss. Damit Wird erreicht, dass sowohl für die Vermittlungseinheit als auch für den Nutzer lediglich ein Konto geführt werden muss, was erheblich zu einer verbesserten Übersichtlichkeit führt. Mit anderen Worten wird somit durch Setzen eines Kenndatenfeldes beispielsweise eines Neukunden bei der Einrichtung bzw. bei der Aktualisierung eines bestehenden Kunden signalisiert, wann die Zuordnungstabelle aktiviert wird, so dass dem Nutzer ein bevorzugter Service bzw. einen spezieller Tarif bzw. eine spezielle Gebühr zugeteilt werden kann. Das anmeldungsgemäße Verfahren ermöglicht somit eine Implementierung einer weiteren Nutzungsmöglichkeit innerhalb eines Netzwerkes, ohne dabei das Netzwerk selbst von den technischen Grundbedingungen beeinflussen bzw. abändern zu müssen. Das anmeldungsgemäße Verfahren bzw. das Kommunikationssystem ist insbesondere dann von Vorteil, wenn beispielsweise händlerseitige bzw. eingangsseitige Systeme eines Kommunikationssystems nicht geeignet sind, die Zuordnungstabelle implementieren zu können. Ferner ist es anmeldungsgemäß von Vorteil, wenn die Verknüpfung bzw. eine zentrale Verwaltung beispielsweise in der Vergebührungseinheit stattfindet, die somit unmittelbaren Einfluss auf die Tarife bzw. Gebühren nehmen kann. Mit dem anmeldungsgemäßen Verfahren bzw. Kommunikationssystem wird somit lediglich durch Aktivieren bzw. Deaktivieren des Kenndatenfelds Einfluss auf die Vergebührung des Gesamtsystems genommen.

Das anmeldungsgemäße Verfahren bzw. Kommunikationssystem stellt somit die Vergebührung vollautomatisch zur Verfügung. Das bedeutet, durch Setzen bzw. Aktivieren des Kenndatenfeldes wird somit gesteuert, welche Vergebührung in der Vergebührungseinheit vorgenommen werden kann. Aufgrund der automatischen Arbeitsweise wird somit der Aufwand, netzwerkseitige Änderung zur Einführung des anmeldungsgemäßen Kommunikationssystems durchzuführen äußerst gering gehalten. Im Gegenzug kann ebenfalls ein Deaktivieren des Kenndatenfeldes dazu herangezogen werden, auf einfache Weise eine entsprechende Änderung bzw. Rückführung der Vergebührung herbeizuführen.

Weitere Weiterbildungen des anmeldungsgemäßen Kommunikationssystems bzw. des anmeldungsgemäßen Verfahrens sind in den Unteransprüchen angegeben.

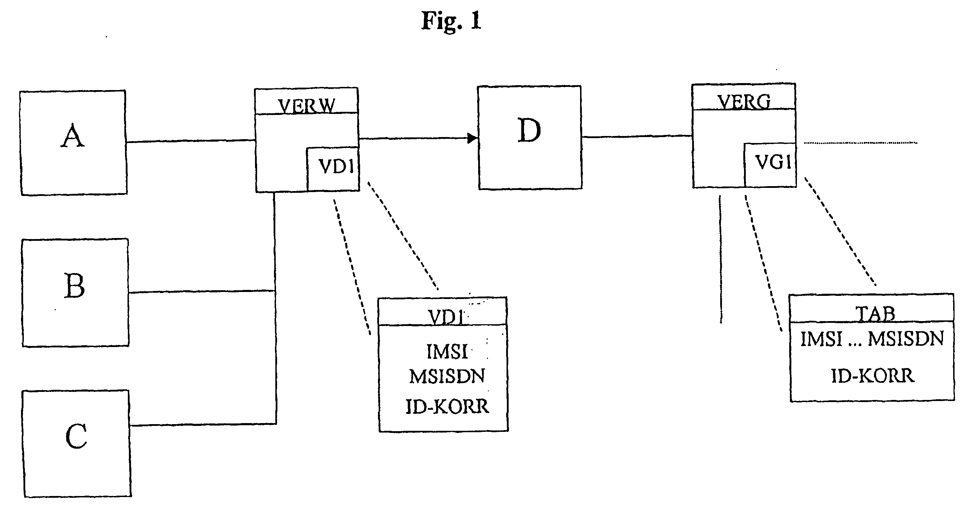

Anmeldungsgemäß wird das Kommunikationssystem dann vorteilhafterweise eingesetzt, wenn für die Mobilstation eine oder mehrere Zone(n) vorgesehen ist bzw. sind, die durch Zusammenfassung von Funkzellen definiert werden. Ein derartiges System ist beispielsweise in der DE 199 11 938 des Anmelders beschrieben, dessen Offenbarung vollinhaltlich in den Offenbarungsgehalt vorliegender Anmeldung integriert werden soll. Insbesondere wird der Offenbarungsgehalt hinsichtlich der Ausgestaltung der jeweiligen Zonen, d.h. Teilnehmergebiete und die verschiedenen Konfigurationsmöglichkeiten, welche in den beispielhaften Figuren 1 bis 6 und den dazugehörigen Textstellen beschrieben ist, in den Offenbarungsgehalt vorliegender Anmeldung integriert. Aufgrund des Aktivierens des Kenndatenfeldes wird somit erreicht, dass beispielsweise zwei oder auch mehrere Mobilstationen, welche jeweils eine separate Vergebührung gemäß des Zusammenschlusses von mehreren Funkzellen zu Zonen aufweisen, miteinander kommunizieren, wobei die jeweiligen Mobilstationen, welche beispielsweise jeweils entsprechend dem bekannten Kommunikationssystem arbeiten, über die Vergebührungseinheit in Verbindung stehen. Aufgrund des Aktivierens bzw. Deaktivierens des Kenndatenfeldes in der Verwaltungseinheit und der entsprechenden Zuordnungstabelle in dem Vergebührungsdatenfeld der Vergebührungseinheit kann somit ohne technischen Aufwand die Nutzungsmöglichkeit für den Mobilstationsnutzer auf einfache Weise verbessert werden. Auch erfolgt somit das Zusammenschalten zweier bekannter Kommunikationssysteme gemäß DE 199 11 938 nahezu vollautomatisch, ohne hierzu netzwerkseitig bestimmte Parametereinstellungen manuell vornehmen zu müssen, sofern das Kenndatenfeld aktivierbar ist.

Das anmeldungsgemäße Kommunikationssystem bzw. anmeldungsgemäße Verfahren ist ebenso vorteilhaft bei Mobilstationen einsetzbar, welche jeweils zumindest ein Teilnehmerkenndatenmodul SIM aufweisen. Hierzu ist es lediglich erforderlich, dass bei Ausgabe des Teilnehmerkenndatenmodul (SIM-Karte) das Kenndatenfeld hinzugefügt bzw. aktiviert wird, anhand diesem dann die Verknüpfung der zugehörigen Teilnehmerkenndaten IMSI und entsprechende Rufnummer MSISDN in der Zuordnungstabelle TAB der Vergebührungseinheit generiert wird.

Aufgrund des Vorhandenseins mehrerer Teilnehmerkenndatenmodule und der entsprechenden Verwaltung in der Zuordnungstabelle besteht somit die Möglichkeit mehrere Mobilstationen in einer Gruppe zusammenzufassen und somit einen speziellen Tarif bzw. eine gesonderte Vergebührung für die Vermittlungseinheit einzuführen.

Wird dem Nutzer eine derartige spezielle Vergebührung bereitgestellt, so besteht ein intensiver Anreiz für den Nutzer dahingehend, Verbindungen zwischen zwei Mobilstationen zu führen, welche aufgrund des anmeldungsgemäßen Kommunikationssystems einem speziellen Tarif unterworfen sind.

Enthält die Zuordnungstabelle zusätzliche Abfragekennungen, beispielsweise zu den Teilnehmerkenndaten (IMSI) und den Rufnummern (MSISDN), so wird eine verbesserte Funktionssicherheit bereitgestellt, die die Arbeitsweise des Kommunikationssystems auf einfache Weise sicherstellt. Auch werden somit jeweils weitere Zugriffsmöglichkeiten geschaffen, ohne in dem Kommunikationssystem direkt mit den Teilnehmerkenndaten bzw. Rufimmmern arbeiten zu müssen, was insbesondere aus sicherheitspolitischen Erwägungen zu begrüßen ist. Auch ist es möglich, aufgrund der zusätzlichen Abfragekennungen gegebenenfalls länderspezifische Kenndaten aufzunehmen, die aufgrund einer Übereinstimmung ebenfalls einen gesonderten Tarif möglich macht. Wird zusätzlich beispielsweise ein Datenfeld für das Aktivierungsdatum hinzugefügt, so kann anhand dieses Datenfeldes auf einfache Weise die Zugehörigkeit der Inanspruchnahme des besonderen Tarifes überprüft werden und insbesondere mit dem Datenfeld aufgrund Aktivierung bzw. Deaktivierung festgelegt werden, ob neben dem Kenndatenfeld der Nutzer der Mobilstation für eine spezielle Vergebührung in Frage kommt.

Es hat sich von Vorteil erwiesen, dass das Kenndatenfeld als fünfstelliger Integer aufgebaut ist, über dessen Wert die Zuordnung zwischen der Rufnummer und der Teilnehmerkenndaten, vorzugsweise für die Vergebührung unterschiedlicher Tarife, abgefragt werden kann. Ferner ist es möglich, über das Kenndatenfeld gegebenenfalls die Anzeige des Vergebührungstarifs in der Mobilstation (MS) zu steuern, mit dem der Nutzer aufgrund der Zuordnungstabelle eine Verbindung aufbauen kann.

Vorteilhafterweise hat sich herausgestellt, wenn das Verwaltungsdatenfeld das Abbuchungskonto des zu der Mobilstation zugehörigen Nutzers, die zugehörigen Zonen mit Kennung und die der Mobilstation zugehörigen Einzelheiten (SIM-Details) des Teilnehmerkenndatenmoduls (SIM) aufweist, welche für das anmeldungsgemäße Verfahren bzw. Kommunikationssystem ausreichend sind, um überprüfen zu können, inwieweit der Nutzer berechtigt ist, dem anmeldungsgemäßen Kommunikationssystem bzw. Verfahren beizutreten bzw. in den Genuss der bevorzugten Vergebührung zu kommen.

Grundsätzlich sei an dieser Stelle festgehalten, dass, sollte ein weiterer Nutzer für das anmeldungsgemäße Kommunikationssystem bzw. Verfahren in Frage kommen, lediglich ein Haupteintrag in dem Verwaltungsdatenfeld vorgenommen werden muss, so dass dann die Implementierung in der Vergebührungseinheit vollautomatisch erfolgen kann.

Um sicherzustellen, dass die verwendeten Mobilstationen insbesondere die jeweiligen Rufnummern mit unterschiedlichen länderspezifischen Rufnummern miteinander kommunizieren können, bzw. den speziellen Vergebührungstarif verwenden können, ist es von Vorteil, dass die Verknüpfung der Mobilstationen durch eine Permutationsverknüpfung erfolgt, und zwar insbesondere eine Permutationsverknüpfung, bei der die jeweiligen länderspezifischen Vorwahlnummern mit aufgelistet werden. Dadurch ist es somit nicht erforderlich, aufwendige Abfragelogiken im Hintergrund durchführen zu müssen, um anmeldungsgemäß eine geeignete Zuordnung zu erreichen.

Wird die Zuordnungstabelle zweiteilig in eine erste Tabelle (TAB1) und in eine zweiten Tabelle (TAB2) aufgebaut, so kann die Erzeugung der jeweiligen Tabelleneinheiten bzw. Tabellenuntereinheiten in unterschiedlichen Abschnitten des gesamten Kommunikationssystems erfolgen. Es hat sich als vorteilhaft herausgestellt, wenn die Erzeugung der ersten Tabelle, welche eine direkte Zuordnung bzw. Verknüpfung zwischen den Teilnehmerkenndaten und den entsprechenden Rufnummern im herkömmlichen Sinne aufweist, als Vorgabe für die Erzeugung der zweiten Tabelle, welche die Permutationsverknüpfungen der jeweiligen Teilnehmerkenndaten mit den jeweiligen Rufnummern aufzeigt, herangezogen wird. Mit dieser Unterscheidung wird erreicht, dass lediglich in einer Einheit, vorzugsweise Vergebührungseinheit, die Erzeugung bzw. die damit zusammenhängende Erhöhung der Datenmenge optimal innerhalb des gesamten Systems positioniert werden kann.

Vorteilhafte Weiterbildungen sind Gegenstand der übrigen Unteransprüche.

Anhand der nachfolgenden Zeichnungen werden Ausführungsbeispiele des anmeldungsgemäßen Gegenstands dargestellt.
Figur 1 zeigt ein Blockdiagram der Funktionsweise des anmeldungsgemäßen Kommunikationssystems:
Figur 2 zeigt exemplarisch eine Zuordnungstabelle für das anmeldungsgemäße Kommunikationssystem;

In Figur 1 ist ein Auszug eines Blockbildes dargestellt, um deutlicher die einzelnen Funktionseinheiten des anmeldungsgemäßen Kommunikationssystems darzulegen. Im Blockbild A ist die Stellung des mit der Vermittlungseinheit verbundenen Händlers dargestellt. Das heißt ein Neukunde wendet sich an den Händler und unterschreibt einen Vertrag zur Nutzung des Kommunikationssystems der Vermittlungseinheit. Unter B werden, falls erwünscht, die Daten bzw. Parameter für die Zonen - im Sinne der DE 199 11 938 - abgerufen. Unter C wird allgemein überprüft, ob der Neukunde bzw. der Neuauftrag akzeptiert oder verworfen werden soll. Die in den Blöcken A-C gesammelten Daten werden ggf. zusätzlich mit weiteren Daten der Verwaltungseinheit VERW zugeführt, welche ein Verwaltungsdatenfeld VD1 enthält, in das die Teilnehmerkenndaten IMSI, die zugeordnete Rufnummer MSISDN und ein Kenndatenfeld ID-KORR gespeichert sind. Üblicherweise werden dann diese gesammelten Daten der Verwaltungseinheit in das Verwaltungssystem der Vermittlungseinheit weitergegeben (Block D). Das Verwaltungssystem der Vermittlungseinheit enthält auch eine Vergebührungseinheit VERG, in der die jeweiligen Gebühren bzw. Verbindungsentgelte berechnet und dem jeweiligen Nutzer in Rechnung gestellt werden. Anmeldungsgemäß enthält nunmehr die Vergebührungseinheit ein Vergebührungsdatenfeld, welches wiederum die Zuordnungstabelle TAB aufweist, in der die Teilnehmerkenndaten IMSI mit den Rufnummern MSISDN verknüpft werden.

Aufgrund der in der Verwaltungseinheit vorgegebenen Aktivierung des Kenndatenfelds, welches über das Verwaltungssystem in die Vergebührungseinheit durchgeschleust wird, wird somit ein sogenannter "Korridor" geschaffen, mit dem einerseits von dem Händler bzw. von der Verwaltungseinheit über das Verwaltungssystem (Block D) der Vermittlungseinheit detaillierte und lediglich eine geringe Anzahl von Parametern zu der Vergebührungseinheit VERG transportiert bzw. übermittelt wird, anhand der dann durch Generieren der Zuordnungstabelle TAB lediglich m der vergebührungseinheit der Vermittlungseinheit eine Verknüpfung zwischen mehreren Mobilstationen eines Nutzers durchgeführt werden kann. Aufgrund dieses in Figur 1 dargestellten Schaubildes ist es ersichtlich, dass die Verknüpfung mehrere Mobilstationen eines oder mehrerer Nutzers durch die in Figur 1 beschriebene Funktionsweise vollautomatisch erfolgen kann, ohne dabei einen technisch aufwendigen Änderungsmechanismus innerhalb der Vermittlungseinheit implementieren zu müssen.

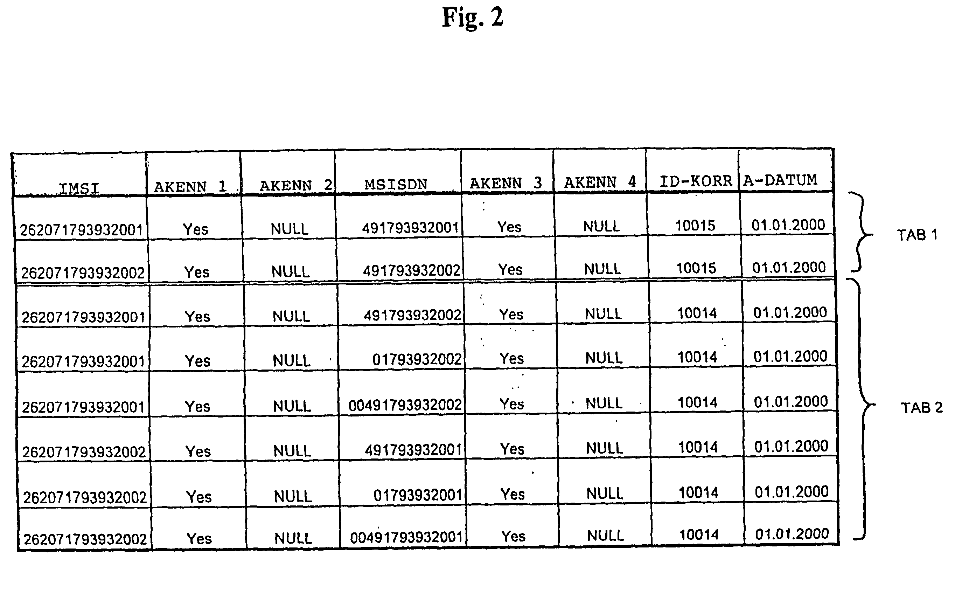

In Figur 2 ist ein mögliches Schemata der Zuordnungstabelle TAB gezeigt, wobei die Zuordnungstabelle in diesem Ausführungsbeispiel zweigeteilt aufgebaut ist, nämlich einer ersten Tabelle TAB 1 für eine direkte Zuordnung bzw. Verknüpfung und eine zweite Tabelle TAB2 für eine Permutationsverknüpfung zwischen den Teilnehmerkenndaten IMSI und jeweiligen Rufnummern MSISDN. In Figur 2 ist eine achtspaltige Zuordnungstabelle TAB dargestellt, wobei in der ersten Spalte die Teilnehmerkenndaten IMSI für ein Telekommunikationssystem bestehend in diesem Ausführungsbeispiel aus zwei Mobilstationen dargestellt ist. In Spalte 4 sind die Rufnummern MSISDN dargestellt, wobei in Spalte 7 das Kenndatenfeld ID-KORR mit einem fünfstelligen Integer und in Spalte 8 das Aktivierungsdatum A-Datum dargestellt ist. Sind beispielsweise die dem Mobilstationen zugeordneten MSISDN- Rufnummern 491793932001 und 491793932002 für das anmeldungsgemäße Kommunikationssystem bzw. anmeldungsgemäße Verfahren geeignet, dann wird anmeldungsgemäß eine direkte Zuordnung durchgeführt, d.h. die Teilnehmerkenndaten IMSI bestehend aus der MCC-Kennung gleich 262 und der MMC-Kennung 07 zusammen mit der MSIN-Kennung 1793932001 werden direkt mit der entsprechenden MSISDN, d.h. 0491793932001, verknüpft, wobei beispielsweise als Kenndatenfeld der fünfstellige Integer gleich 10015 festgelegt wird. Gleiches erfolgt mit der IMSI und MSISDN der zweiten Mobilstation. Diese Einträge gewährleisten somit eine direkte Zuordnung zwischen den Teilnehmerdaten der IMSI und den Rufnummern MSISDN und werden aufgrund des Kenndatenfelds ID-KORR gleich 10015 erzeugt (s. TAB 1). Das Kenndatenfeld, welches die direkte Verknüpfung zwischen den jeweiligen Teilnehmerkenndaten IMSIs und den entsprechenden Rufnummern anzeigt, kann als sogenanntes Haupt-Kenndatenfeld bezeichnet werden, welches beispielsweise lediglich händlerseitig festgelegt werden muss bzw. somit händlerseitig mit einem bestimmten Trigger das Haupt-Kenndatenfeld aktiviert wird.

Wie in Figur 2 gezeigt wird, erfolgt aufgrund des ggf. mit einem separaten Trigger aktivierten Kenndatenfeldes eine weitere Permutationsverknüpfung zwischen den beiden Teilnehmerkenndaten IMSI und den Rufnummern MSISDN der beiden verwendeten Mobilstationen. Hierfür werden unter Berücksichtigung der länderspezifischen Vorwahlnummern in dieser Ausführungsform die Tabelle TAB 2 in der Vergebührungseinheit VERG erzeugt. Mit dieser Verknüpfung wird aufgrund des Vorhandenseins der Zuordnungstabelle in der Vergebührungseinheit jedes Telefonat zwischen den beiden ausgewählten Mobilstationen mit einem ggf. zu dem ersten Kenndatenfeld unterschiedlichen Kenndatenfeld, in diesem Fall fünfstelliger Integer gleich 10014, erreicht, dass bei einer Verbindung zwischen den beiden Mobilstationen eine in der Zuordnungstabelle TAB, ggf. TAB 2, vorhandene Verknüpfung erfolgte, welche dann aufgrund der Übereinstimmung mit einem speziellen Tarif verrechnet werden kann. Die Erfüllung der Übereinstimmung kann ggf. von weiteren Abfragekennungen AKENN 1 bis AKENN 4 bzw. von dem Aktivierungsdatum A-Datum abhängig gemacht werden. Um die Zuordnungslogik einfach zu gestalten, sind in der Zuordnungstabelle TAB auch die länderspezifischen Vorwahlnummern integriert, so dass eine eindeutige Zuordnung bzw. Übereinstimmung vorliegen kann und somit der verwaltungstechnische Abfragernodus in der Vergebührungseinheit auf ein Minimum reduziert wurde. Die Aktivierung und Deaktivierung des anmeldungsgemäßen Kommunikationssystems kann somit auf einfache Weise durch Setzen bzw. Aktivieren des Kenndatenfeldes festgelegt werden. Das bedeutet, dass für das Deaktivieren des Kommunikationssystems lediglich das Kenndatenfeld aktualisiert bzw. gelöscht werden muss. Sollte eine weitere Mobilstation zu den bereits bestehenden Kommunikationssystem hinzugefügt werden, so muss lediglich in der Verwaltungseinheit die Teilnehmerkenndaten IMSI und die zugeordnete Rufnummer MSISDN zusammen mit dem Kenndatenfeld ID-KORR als Haupteintrag zur Verfügung gestellt werden, welches dann in der Vergebührungseinheit die jeweilige Zuordnungstabelle TAB, d.h. TAB 1 und/oder TAB 2 erzeugt wird.

Hervorzuheben ist, dass durch Setzen des Kenndatenfeldes beispielsweise in der Verwaltungseinheit die erste Zuordnungstabelle TAB1 erzeugt wird und diese dann dazu führt, dass die zweite Zuordnungstabelle TAB2 mit den Permutationsverknüpfungen und gegebenenfalls mit einem von dem ersten Kenndatenfeld unterschiedlichen zweiten Kenndatenfeld erzeugt wird. Die Erzeugung der zweiten Zuordnungstabelle TAB 2 wird vorteilhafterweise in der Vergebührungseinheit vorgenommen, so dass die in dem Gesamtsystem zu verwaltende Datenmenge ebenfalls auf ein Minimum gehalten werden kann. Anhand der unterschiedlichen Kenndatenfelder kann dann sowohl eine unterschiedliche Vergebührung vorgenommen werden als auch können die Kenndatenfelder als Trigger für weitere Funktionalitäten innerhalb der Vermittlungseinheiten dienen, beispielsweise dem Anzeigen der jeweiligen Vergebührungstarife, vorzugsweise in den Mobilstationen (MS).

Es ist verständlich, dass bei mehreren Mobilstationen sich aufgrund der Permutationsverknüpfung die Zuordnungstabelle vergrößert. Jedoch ist es nachvollziehbar dass die Implementierung weitere Mobilstationen in das anmeldungsgemäße Kommunikationssystem nahezu beliebig fortgesetzt werden kann, ohne dabei einen technisch großen Aufwand innerhalb der Vermittlungseinheit betreiben zu müssen, dennoch aber vollautomatisch implementiert werden kann.

An dieser Stelle sei erneut hervorgehoben, dass das anmeldungsgemäße Kommunikationssystem insbesondere im Zusammenspiel mit dem Kommunikationssystem gemäß DE 199 11 938 des Anmelders sowohl verwaltungstechnisch als auch netzwerkseitig als besonders vorteilhaft geeignet ist.

## Patentansprüche

1. Kommunikationssystem bestehend aus zumindest einer Mobilstation (MS), die ein Teilnehmerkenndatenmodul (SIM-Karte) und darauf abgelegte Teilnehmerkenndaten (IMSI) aufweist und die durch eine Vermittlungseinheit (VI) mit einer entsprechenden Heimregisterdatei (HLR) versorgt wird, in der die zu den Telnehmerkenndaten (IMSI) zugeordnete Rufnummer (MSISDN) registriert ist,
**gekennzeichnet durch**
eine Verwaltungseinheit (VERW) mit einem Verwaltungsdatenfeld (VD1), welches die Teilnehmerkenndaten (IMSI), die zugeordnete Rufnummer (MSISDN) und ein Kenndatenfeld (ID-KORR) enthält, das sich einem aktivierten oder deaktivierten Zustand befindet, und
eine Vergebührungseinheit (VERG) mit einem Vergebührungsdatenfeld (VG1), welches eine Zuordnungstabelle (TAB) enthält, in der die Teilnehmerkenndaten (IMSI) mit den Rufnummern (MSISDN) verknüpft werden, sofern sich das Kenndatenfeld (ID-KORR) im aktivierten Zustand befindet und den zu verknüpfenden Teilnehmerkenndaten (IMSI) und Rufnummern (MSISDN) identische Werte des Kenndatenfeldes (ID-KORR) zugewiesen sind.

2. Kommunikationssystem nach Anspruch 1, wobei für die Mobilstation (MS) eine oder mehrere Zone(n) vorgesehen ist bzw. sind, die durch Zusammenfassung von Funkzellen definiert werden, wobei vorzugsweise ein Festnetzanschluss der Vermittelungseinheit (VI) als Basisparameter für die Zone herangezogen wird.

3. Kommunikationssystem nach einem der Ansprüche 1 oder 2, wobei für jede Mobilstation (MS) jeweils zumindest ein Teilnehmerkenndatenmodul (SIM) vorgesehen ist.

4. Kommunikationssystem nach Anspruch 3, wobei die Teilnehmerkenndatenmodule (SIM) mehrerer Mobilstationen für die Vermittelungseinheit (VI) als Gruppe erkennbar ist.

5. Kommunikationssystem nach Anspruch 3 oder 4, wobei die Verbindung zwischen zwei Mobilstationen (MS) einem speziellen Tarif unterworfen ist.

6. Kommunikationssystem nach einem der Ansprüche 1 bis 5, wobei die Zuordnungstabelle (TAB) zusätzliche Abfragekennungen (AKENN 1, AKENN 2, AKENN 3, AKENN 4) zu den Teilnehmerkenndaten (IMSI) und den Rufnummern (MSISDN) sowie ein Datenfeld für das Aktivierungsdatum (A-Datum) aufweist.

7. Kommunikationssystem nach einem der Ansprüche 1 bis 6, wobei das Kenndatenfeld einen fünfstelligen Integer aufweist, der zusätzlich für die Vergebührung herangezogen wird.

8. Kommunikationssystem nach einer Ansprüche 2 bis 7, wobei das Verwaltungsdatenfeld das Konto des zu der Mobilstation zugehörigen Nutzers, die zugeordneten Zonen mit Kennung und die der Mobilstation zugehörigen Einzelheiten (SIM-Details) des Teilnehmerkenndatenmoduls (SIM) enthält.

9. Kommunikationssystem nach einem der Ansprüche 1 bis 8, wobei die Zuordnungstabelle zweiteilig in eine erste Tabelle (TAB1) und eine zweite Tabelle (TAB2) aufgebaut ist.

10. Verfahren zum Betreiben eines Kommunikationssystems, insbesondere unter Verwendung des Kommunikationssystems nach einem der Ansprüche 1 bis 9, welches die Schritte aufweist:
a) Bereitstellen einer Mobilstation (MS), die ein Teilnehmerkenndatenmodul (SIM-Karte) und darauf abgelegte Teilnehmerkenndaten (IMSI) aufweist und die durch eine Vermittlungseinheit (VI) mit einer entsprechenden Heimregisterdatei (HLR) versorgt wird, in der die zu den Teilnehmerkenndaten (IMSI) zugeordnete Rufnummer (MSISDN) registriert ist,
**gekennzeichnet durch**
b) Bereitstellen einer Verwaltungseinheit (VERW) mit einem Verwaltungsdatenfeld (VD1), welches die Teilnehmerkenndaten (IMSI), die zugeordnete Rufnummer (MSISDN) und ein Kenndatenfeld (ID-KORR) enthält, das sich einem aktivierten oder deaktivierten Zustand befindet und
c) Verknüpfen der Teilnehmerkenndaten (IMSI) mit der Rufnummer (MSISDN) anhand einer Zuordnungstabelle (TAB), sofern sich das Kenndatenfeld (ID-KORR) im aktivierten Zustand befindet und den zu verknüpfenden Teilnehmerkenndaten (IMSI) und Rufnummern (MSISDN) identische Werte des Kenndatenfeldes (ID-KORR) zugewiesen sind.

11. Verfahren nach Anspruch 10, wobei das Kenndatenfeld (ID-KORR) festlegt, ob das Verknüpfen, vorzugsweise in der Vergebührungseinheit (VERG), erfolgt.

12. Verfahren nach einem der Ansprüche 10 oder 11, wobei mindestens zwei Mobilstationen (MS) bereitgestellt werden, welche unterschiedliche Teilnehmerkenndatenmodule (SIM) aufweisen.

13. Verfahren nach einem der Ansprüche 10 bis 12, wobei für die Mobilstation (MS) eine oder mehrere Zone(n) vorgesehen ist bzw. sind, die durch Zusammenfassung von Funkzellen definiert werden, wobei vorzugsweise ein Festnetzanschluss der Vermittelungseinheit (VI) als Basisparameter der Zone herangezogen wird.

14. Verfahren nach einem der Ansprüche 10 bis 13, wobei das Kenndatenfeld (ID-KORR) ein fünfstelliger Integer ist, dessen Wertigkeit vorgibt, welche Verknüpfung möglich ist, und für die Vergebührung herangezogen wird.

15. Verfahren nach einem der Ansprüche 10 bis 14, wobei die Verknüpfung der Mobilstationen (MS) durch Permutationsverknüpfung der jeweiligen Teilnehmerkenndaten (IMSI) mit den jeweiligen Rufnummern (MSISDN) erfolgt, wobei vorzugsweise die unterschiedlichen länderspezifischen Vorwahlnummern mit der Rufnummer in der Zuordnungstabelle (TAB), insbesondere für die Vergebührung, zusätzlich aufgelistet werden.

16. Verfahren nach einem der Ansprüche 10 bis 15, wobei die Zuordnungstabelle zweiteilig in eine erste Tabelle (TAB1) und eine zweite Tabelle (TAB2) aufgebaut ist und
a) die erste Tabelle durch Aktivieren des Kenndatenfeldes (ID-KORR) eine direkte Verknüpfung zwischen den Teilnehmerkenndaten (IMSI) und den entsprechenden Rufnummern (MSISDN) erzeugt und
b) die zweite Tabelle nach Erzeugen der ersten Tabelle die Permutationsverknüpfungen der jeweiligen Teilnehmerkenndaten (IMSI) mit den jeweiligen Rufnummern (MSISDN) enthält.

17. Verfahren nach Anspruch 16, wobei die zweite Tabelle (TAB2) in der Vergebührungseinheit (VERG) erzeugt wird.

## Claims

1. Communication system comprising at least one mobile station (MS) which has a subscriber identifier data module (SIM card) and subscriber identifier data (IMSI) stored thereon and which a switching unit (VI) supplies with an appropriate home location register file (HLR) which contains a record of the telephone number. (MSISDN) associated with the subscriber identifier data (IMSI),
**characterized by**
a management unit (VERW) having a management data field (VD1) which contains the subscriber identifier data (IMSI), the associated telephone number (MSISDN) and an identifier data field (ID-KORR) which is in an activated or deactivated state, and
a charging unit (VERG) having a charging data field (VG1) which contains an association table (TAB) in which the subscriber identifier data (IMSI) are linked to the telephone numbers (MSISDN) if the identifier data field (ID-KORR) is in the activated state and the subscriber identifier data (IMSI) and telephone numbers (MSISDN) which are to be linked have identical values of the identifier data field (ID-KORR) associated with them.

2. Communication system according to Claim 1, where the mobile station (MS) has one or more zone(s) provided for it which are defined by combining radio cells, with preferably a landline network line on the switching unit (VI) being used as basic parameter for the zone.

3. Communication system according to either of Claims 1 and 2, where each mobile station (MS) has at least one respective subscriber identifier data module (SIM) provided for it.

4. Communication system according to Claim 3, where the subscriber identifier data modules (SIM) of a plurality of mobile stations are identifiable to the switching unit (VI) as a group.

5. Communication system according to Claim 3 or 4, where the connection between two mobile stations (MS) is subject to a specific tariff.

6. Communication system according to one of Claims 1 to 5, where the association table (TAB) has additional test identifiers (AKENN 1, AKENN 2, AKENN 3, AKENN 4) over the subscriber identifier data (IMSI) and the telephone numbers (MSISDN) and also has a data field for the activation date (A date).

7. Communication system according to one of Claims 1 to 6, where the identifier data field has a five-digit integer which is additionally used for charging.

8. Communication system according to one of Claims 2 to 7, where the management data field contains the account of the user associated with the mobile station, the associated zones with identifiers and the details associated with the mobile station (SIM details) from the subscriber identifier data module (SIM).

9. Communication system according to one of Claims 1 to 8, where the association table is of two-part design comprising a first table (TAB1) and a second table (TAB2).

10. Method for operating a communication system, particularly using the communication system according to one of Claims 1 to 9, which has the following steps:
a) provision of a mobile station (MS) which has a subscriber identifier data module (SIM card) and subscriber identifier data (IMSI) stored thereon and which a switching unit (VI) supplies with an appropriate home location register file (HLR) which contains a record of the telephone number (MSISDN) associated with the subscriber identifier data (IMSI),
**characterized by**
b) provision of a management unit (VERW) having a management data field (VD1) which contains the subscriber identifier data (IMSI), the associated telephone number (MSISDN) and an identifier data field (ID-KORR) which is in an activated or deactivated state, and
c) linking of the subscriber identifier data (IMSI) to the telephone number (MSISDN) using an association table (TAB) if the identifier data field (ID-KORR) is in the activated state and the subscriber identifier data (IMSI) and telephone numbers (MSISDN) which are to be linked have identical values of the identifier data field (ID-KORR) associated with them.

11. Method according to Claim 10, where the identifier data field (ID-KORR) stipulates whether the linking is performed, preferably in the charging unit (VERG).

12. Method according to either of Claims 10 and 11, where at least two mobile stations (MS) are provided which have different subscriber identifier data modules (SIM).

13. Method according to one of Claims 10 to 12, where the mobile station (MS) has one or more zone(s) provided for it which are defined by combining radio cells, with preferably a landline network line on the switching unit (VI) being used as basic parameter for the zone.

14. Method according to one of Claims 10 to 13, where the identifier data field (ID-KORR) is a five-digit integer, whose value prescribes what link is possible, and is used for charging.

15. Method according to one of Claims 10 to 14, where the mobile stations (MS) are linked through permutation linking of the respective subscriber identifier data (IMSI) to the respective telephone numbers (MSISDN), with preferably the different country-specific dialling codes being additionally listed with the telephone number in the association table (TAB), particularly for charging.

16. Method according to one of Claims 10 to 15, where the association table is of two-part design comprising a first table (TAB1) and a second table (TAB2), and
a) the first table produces a direct link between the subscriber identifier data (IMSI) and the appropriate telephone numbers (MSISDN) by activating the identifier data field (ID-KORR), and
b) the second table, following production of the first table, contains the permutation links between the respective subscriber identifier data (IMSI) and the respective telephone numbers (MSISDN).

17. Method according to Claim 16, where the second table (TAB2) is produced in the charging unit (VERG).

## Revendications

1. Système de communication composé d'au moins une station mobile (MS) qui présente un module de données d'identification d'abonné (carte SIM) et des données d'identification d'abonné (IMSI) stockées sur celui-ci et qui est alimenté par le biais d'une unité de commutation (VI) avec un fichier de registre de domicile (HLR) correspondant dans lequel est enregistré le numéro d'appel (MSISDN) affecté aux données d'identification d'abonné (IMSI), **caractérisé par** une unité de gestion (VERW) comprenant un champ de données de gestion (VD1) qui contient les données d'identification d'abonné (IMSI), le numéro d'appel (MSISDN) affecté et un champ de données d'identification (ID-KORR) qui se trouve dans un état activé ou désactivé et une unité de taxation (VERG) comprenant un champ de données de taxation (VG1) qui contient un tableau d'affectation (TAB) dans lequel les données d'identification d'abonné (IMSI) sont combinées avec les numéros d'appel (MSISDN), sous réserve que le champ de données d'identification (ID-KORR) se trouve dans l'état activé et que des valeurs identiques du champ de données d'identification (ID-KORR) soient affectées aux données d'identification d'abonné (IMSI) et aux numéros d'appel (MSISDN) à combiner.

2. Système de communication selon la revendication 1, une ou plusieurs zone(s) étant prévue(s) pour la station mobile (MS), laquelle ou lesquelles est ou sont définie(s) par le regroupement de cellules de radiocommunication, un raccordement au réseau fixe de l'unité de commutation (VI) étant de préférence utilisé comme paramètre de base pour la zone.

3. Système de communication selon l'une des revendications 1 ou 2, au moins un module de données d'identification d'abonné (SIM) étant à chaque fois prévu pour chaque station mobile (MS).

4. Système de communication selon la revendication 3, les modules de données d'identification d'abonné (SIM) de plusieurs stations mobiles pouvant être reconnus par l'unité de commutation (VI) comme étant un groupe.

5. Système de communication selon la revendication 3 ou 4, la liaison entre deux stations mobiles (MS) étant soumise à un tarif spécial.

6. Système de communication selon l'une des revendications 1 à 5, le tableau d'affectation (TAB) présentant des identifiants d'interrogation (AKENN 1, AKENN 2, AKENN 3, AKENN 4) complémentaires aux données d'identification d'abonné (IMSI) et aux numéros d'appel (MSISDN) ainsi qu'un champ de données pour la date d'activation (A-Datum) .

7. Système de communication selon l'une des revendications 1 à 6, le champ de données d'identification présentant un nombre entier à cinq chiffres qui est utilisé en plus pour la taxation.

8. Système de communication selon l'une des revendications 2 à 7, le champ de données de gestion contenant le compte de l'utilisateur associé à la station mobile, les zones affectées avec l'identifiant et les informations détaillées (détails SIM) du module de données d'identification d'abonné (SIM) appartenant à la station mobile.

9. Système de communication selon l'une des revendications 1 à 8, le tableau d'affectation étant constitué en deux parties en un premier tableau (TAB1) et un deuxième tableau (TAB2).

10. Procédé d'exploitation d'un système de communication, notamment en utilisant le système de communication selon l'une des revendications 1 à 9, lequel présente les étapes suivantes :
a) mise à disposition d'une station mobile (MS) qui présente un module de données d'identification d'abonné (carte SIM) et des données d'identification d'abonné (IMSI) stockées sur celui-ci et qui est alimenté par le biais d'une unité de commutation (VI) avec un fichier de registre de domicile (HLR) correspondant dans lequel est enregistré le numéro d'appel (MSISDN) affecté aux données d'identification d'abonné (IMSI),
**caractérisé par**
b) la mise à disposition d'une unité de gestion (VERW) comprenant un champ de données de gestion (VD1) qui contient les données d'identification d'abonné (IMSI), le numéro d'appel (MSISDN) affecté et un champ de données d'identification (ID-KORR) qui se trouve dans un état activé ou désactivé et
c) combinaison des données d'identification d'abonné (IMSI) avec le numéro d'appel (MSISDN) au moyen d'un tableau d'affectation (TAB), sous réserve que le champ de données d'identification (ID-KORR) se trouve dans l'état activé et que des valeurs identiques du champ de données d'identification (ID-KORR) soient affectées aux données d'identification d'abonné (IMSI) et aux numéros d'appel (MSISDN) à combiner.

11. Procédé selon la revendication 10, le champ de données d'identification (ID-KORR) déterminant si la combinaison, de préférence dans l'unité de taxation (VERG), a lieu.

12. Procédé selon l'une des revendications 10 ou 11, au moins deux stations mobiles (MS) étant mises à disposition, lesquelles présentent des modules de données d'identification d'abonné (SIM) différents.

13. Procédé selon l'une des revendications 10 à 12, une ou plusieurs zone(s) étant prévue(s) pour la station mobile (MS), laquelle ou lesquelles est ou sont définie(s) par le regroupement de cellules de radiocommunication, un raccordement au réseau fixe de l'unité de commutation (VI) étant de préférence utilisé comme paramètre de base pour la zone.

14. Procédé selon l'une des revendications 10 à 13, le champ de données d'identification (ID-KORR) étant un nombre entier à cinq chiffres dont la valeur prédéfinit la combinaison qui est possible et qui est utilisé en plus pour la taxation.

15. Procédé selon l'une des revendications 10 à 14, la combinaison des stations mobiles (MS) étant réalisée par une combinaison par permutation des différentes données d'identification d'abonné (IMSI) avec les différents numéros d'appel (MSISDN), les différents préfixes nationaux spécifiques étant de préférence énumérés en plus avec le numéro d'appel dans le tableau d'affectation (TAB), notamment pour la taxation.

16. Procédé selon l'une des revendications 10 à 15, le tableau d'affectation étant constitué en deux parties en un premier tableau (TAB1) et un deuxième tableau (TAB2) et
a) le premier tableau produisant une combinaison directe entre les données d'identification d'abonné (IMSI) et les numéros d'appel (MSISDN) correspondants en activant le champ de données d'identification (ID-KORR) et
b) le deuxième tableau, après avoir produit le premier tableau, contenant les combinaisons par permutation des différentes données d'identification d'abonné (IMSI) avec les différents numéros d'appel (MSISDN).

17. Procédé selon la revendication 16, le deuxième tableau (TAB2) étant généré dans l'unité de taxation (VERG).
